# EUROPEAN PATENT APPLICATION

(11) **EP 2 546 607 A1**
(43) Date of publication of application: **16.01.2013**
(21) Application number: 10847502.1
(22) Date of filing: 09.12.2010
(51) Int. Cl.: G01C 21/00

(54) **NAVIGATION DEVICE AND GUIDANCE METHOD FOR INFORMATION RELATING TO DESTINATION**

(30) Priority: 11.03.2010 JP 2010054660
(71) Applicant: Clarion Co., Ltd., Saitama 330-0081 (JP)
(72) Inventor: KATOU, Akane, Saitama-shi Saitama 330-0081 (JP)
(74) Representative: Browne, Robin Forsythe
(86) International application number: PCT/JP2010/072123
(87) International publication number: WO 2011/111275

(57) **Abstract**

Provided is a configuration for helping a user achieve an objective (an errand) to be executed in a destination in a navigation device. Specifically provided is a navigation device for performing guidance using map information. Said navigation device acquires and stores information relevant to a destination, the information including an objective which a user intends to execute in the destination, and at the time of arrival at the destination or departure from the destination, outputs and notifies the user of the information relevant to the destination.

## Description

### Technical Field

The present invention relates to a navigation device and a guidance method for information relating to a destination. This application claims priority to Japanese Patent Application No. 2010-54660 filed on March 11, 2010, and in the designated countries where incorporation of documents by reference is approved, the content described in the specification of the aforementioned patent application is incorporated into the present patent application by reference.

### Background Art

A navigation device mounted on a vehicle or the like, accepts from a user a setting of a destination, and searches for an optimum route which connects a departure place or a current position with the destination. In addition, the navigation device performs route guidance according to thus retrieved route and guides the user to the destination. By way of example, in the Patent Document 1, there is described the navigation device as mentioned above.

### Citation List

### Patent Literature

Patent Literature 1 : Japanese Unexamined Patent Application Publication No. 9-16077

### Summary of Invention

### Technical Problem

Typically, a user has a purpose to be carried out at the destination which is set by himself or herself (for example, the purpose may be to go shopping, to see a movie, to do or watch sports, or the like). However, in some cases, when the user arrives at the destination, there is a possibility that the user has already forgot a part of the purpose to be carried out. In another case, after leaving the destination, the user may come to the realization that a part of the purpose to be carried out has not been accomplished yet.

In view of those situations above, an object of the present invention is to provide a technique to support the user so that the user is able to accomplish a purpose (or finish an errand) which is to be carried out at the destination.

### Solution to Problem

One aspect of the present invention to solve the aforementioned problems is directed to a navigation device for performing guidance by using map information, and this navigation device acquires and stores information relating to the destination, including a purpose that the user intends to carry out at the destination, and outputs the information relating to the destination upon arriving at the destination or leaving the destination, so as to notify the user of the information.

Here, the aforementioned navigation device may output and notify the user of the information relating to the destination, upon arriving at a via point or leaving the via point.

The aforementioned navigation device may acquire the purpose together with information indicating a category of the purpose, and upon arriving at a via point or leaving the via point, specify a category of the via point by using map information, determine whether or not the category of the via point relates to the category of the purpose, and if they are relevant to each other, the navigation device may output the information relating to the destination.

The aforementioned navigation device acquires the category of the purpose, by accepting an input from the user or extracting the category from the information relating to the destination.

Any of the aforementioned navigation device may store the information relating to the destination as a history of the destination, and when a new route is acquired, it is determined whether or not the history includes the information relating to the destination of the new route, and if it is included, the navigation device may output the information relating to the destination.

When the information relating to the destination is outputted, the aforementioned navigation device may accept an input of data indicating whether or not the purpose included in the information relating to the destination is accomplished, and stores thus accepted data as a history. Then, upon acquiring a new route, the navigation device outputs the data, together with the information relating to the destination of thus acquired new route.

Another aspect of the present invention to solve the problems described above is directed to a guidance method for the information relating to the destination in the navigation device, this method acquiring and storing information relating to the destination, including a purpose that the user intends to carry out at the destination, and upon arriving at the destination or leaving the destination, the method outputs the information relating to the destination, so as to notify the user of the information.

### Advantageous Effects of Invention

According to the present invention, it is possible to support the user to accomplish a purpose (or finish an errand) which is to be carried out at the destination.

### Brief Description of Drawings

FIG. 1 is a block diagram showing one example of a schematic hardware configuration of the navigation device relating to a first embodiment of the present invention;
FIG. 2 illustrates one example of a map database;
FIG. 3 is a block diagram showing one example of a functional configuration of a main controller in the navigation device;
FIG. 4 is a flow diagram showing one example of a destination memo accepting process in the navigation device;
FIG. 5 is a flow diagram showing one example of a destination memo notifying process in the navigation device;
FIG. 6 illustrates examples of a user interface screen for accepting the destination memo;
FIG. 7 illustrates examples of the user interface screen for providing a notice of the destination memo; and
FIG. 8 illustrates one example of the user interface screen for providing a notice of the destination memo.

### Description of Embodiments

Hereinafter, the first embodiment of the present invention will be explained with reference to the accompanying drawings.

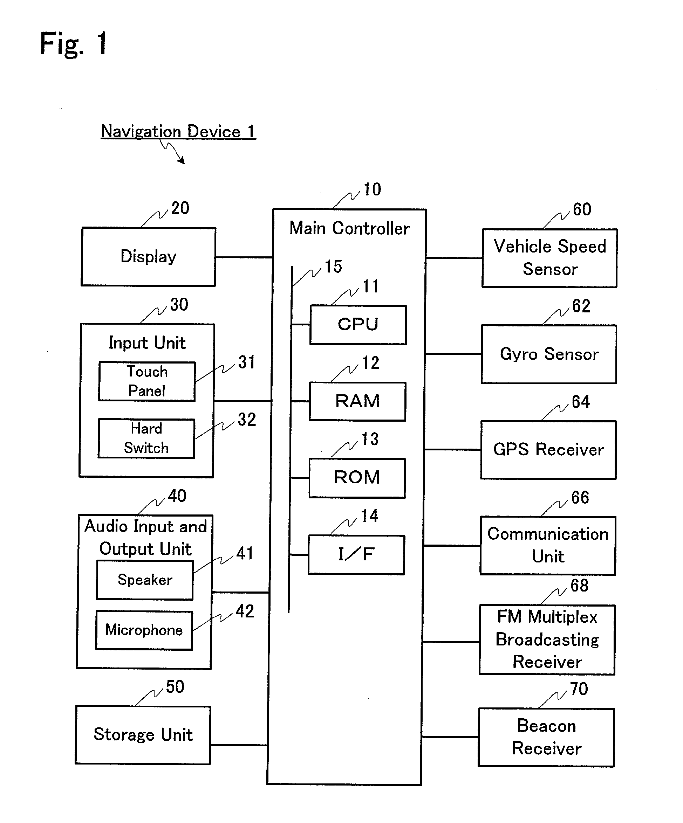

FIG. 1 is a block diagram showing one example of the schematic hardware configuration of the navigation device relating to the first embodiment of the present invention.

The navigation device 1 displays information, or the like, regarding a map, a current position, a route, and a facility, thereby performing a navigation process for guiding a user.

The navigation device 1 includes a main controller 10, a display 20, an input unit 30 (a touch panel 31 and a hard switch 32), an audio input and output unit 40 (a speaker 41 and a microphone 42), a storage unit 50, a vehicle speed sensor 60, a gyro sensor 62, a GPS (Global Positioning System) receiver 64, a communication unit 66, an FM multiplex broadcasting receiver 68, and a beacon receiver 70.

The main controller 10 is a main unit for performing a process to implement various functions of the navigation device 1. The main controller 10 is made up of a CPU (Central Processing Unit) 11 for executing various arithmetic processing, memories such as RAM (Random Access Memory) 12 and ROM (Read Only Memory) 13 for storing programs and data, and an interface (I/F) 14 for controlling other devices, those elements being connected via a signal line 15.

The main controller 10 uses information being outputted from the vehicle speed sensor 60, the gyro sensor 62, and the GPS receiver 64, for instance, to calculate a current position. In addition, on the basis of thus obtained current position information, the main controller reads out from the storage unit 50, map data necessary for display. Furthermore, the main controller 10 graphically expands the map data being read out, and notifies the display 20 of the data as graphics information in such a manner as superimposing thereon a mark indicating the current position.

The main controller 10 uses the map data to calculate an optimum route (a recommended route) connecting a departure place or the current position with a destination designated by the user, and notifies the display 20 of the route as graphics information. A via point designated by the user may be included between the departure place or the current position, and the destination. The main controller 10 outputs audio data and operation sounds for guiding the user via the speaker 41. In addition, the main controller 10 accepts an instruction from the user via the input unit 30 or the microphone 42, and executes a process in association with the instruction.

The main controller 10 further receives traffic information and the like, delivered from the VICS center, via the FM multiplex broadcasting receiver 68 or the beacon receiver 70, and notifies the display 20 of the information. The traffic information received from the VICS center is stored in the RAM 12 or the storage unit 50.

The main controller 10 accepts from the user, information relating to the destination, including a purpose that the user intends to carry out at the destination, via the input unit 30, the microphone 42, the communication unit 66, and the like. In addition, when a predetermined condition is satisfied such as arriving at the destination or a via point, the main controller 10 notifies the display 20 of the information relating to the destination as graphics information. These processes will be described in detail in the following.

The display 20 is provided with a screen for displaying a character and/or an image, and it is a unit for displaying on the screen the graphics information generated by the main controller 10. The display 2 is made up of a liquid crystal display or an organic EL (Electro-Luminescence) display, for instance.

The input unit 30 is a unit for accepting an instruction from the user according to the operation by the user. The input unit 30 is made up of the touch panel 31, the hard switch 32, and the like. The input unit 30 may include a remote controller which enables a remote operational instructions to the navigation device 1. The remote controller is provided with various hard switches, and transmits information to the navigation device 1, the information indicating that any of those various hard switches have been manipulated.

The touch panel 31 is an operation panel being transparent which is affixed to the surface of the display 20. The touch panel 31 specifies a touch position being associated with the XY coordinates of the image which is displayed on the display 20, converts the touch position into the coordinates, and outputs the coordinates to the main controller 10. The touch panel 31 is made up of input detecting elements of a type, such as pressure-sensitive type or electrostatic type. The hard switch 32 may be, for instance, a dial switch, a scroll key, a keyboard, and a button.

The audio input and output unit 40 is provided with the speaker 41 as an audio output unit, and the microphone 42 as an audio input unit. The speaker 41 outputs an audio signal generated by the main controller 10. The microphone 42 captures audio data from the outside of the navigation device 1, such as voice of the user and other passengers, and outputs the audio data to the main controller 10.

The microphone 41 and the speaker 42 are separately mounted on predetermined portions of a vehicle. It is a matter of course that the speaker 41 and the microphone 42 may be placed in an integrated enclosure. The navigation device 1 may be provided with more than one speaker 41 and more than one microphone 42.

The vehicle speed sensor 60, the gyro sensor 62, and the GPS receiver 64 are used to detect a current position (a location of the vehicle) and the like, of a moving object (the navigation device 1).

The vehicle speed sensor 60 is a sensor for outputting vehicle speed data that is used to calculate a vehicle speed. The gyro sensor 62 is made up of an optical fiber gyroscope, a vibrating gyroscope, or the like, to detect an angular rate according to a rotation of the moving object. The GPS receiver 64 receives a signal from a GPS satellite, measures a distance between the moving object and the GPS satellite, and a rate of change of the distance, with respect to at least three satellites, thereby obtaining the current position and a travel speed of the moving object. Various data thus detected is transferred to the main controller 10 and used for the navigation process.

The communication unit 66 is a unit for exchanging data with the network, such as a cell phone line and the Internet.

The FM multiplex broadcasting receiver 68 receives an FM multiplex broadcasting signal that is transmitted from an FM multiplex broadcasting station. The FM multiplex broadcasting information includes brief current traffic information, information on restrictions, SA/PA (service area/parking area) information, weather information, and the like, according to the VICS (Vehicle Information Communication System: registered trademark), and character information and the like, provided by a radio station as FM multiplex general information.

The beacon receiver 70 receives traffic congestion information, information on restrictions, SA/PA information, parking lot information, and the like, transmitted from beacons.

The storage unit 50 stores programs and data necessary for the main controller 10 to execute various processes, a map database used for the navigation process, and a phonetic dictionary used for voice recognition. The CPU 11 of the main controller 10 reads out those information items onto the RAM 12 to be used. The storage unit 50 is made up of HDD (Hard Disk Drive), a CD-ROM, a DVD-ROM, and the like, for instance.

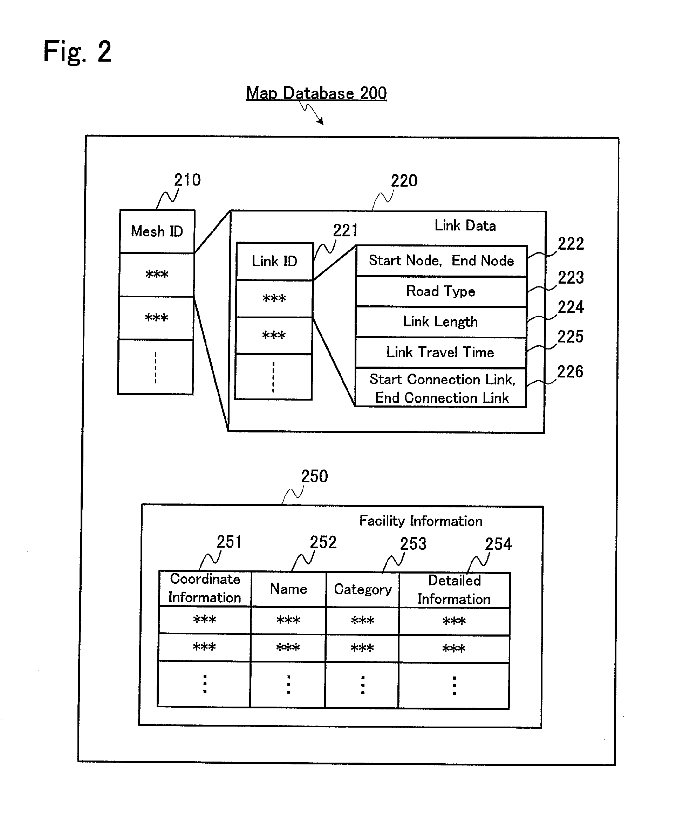

With reference to FIG. 2, an explanation will be made as to the map database. FIG. 2 illustrates one example of the map database.

The map database 200 includes link data 220 with respect to each identification code (mesh ID) 210 indicating a mesh being a region partitioned on the map, the link data representing each link constituting a road included in the mesh region. The link data 220 includes with respect to each link identification code (link ID) 221, coordinate information 222 of two nodes (a start node and an end node) constituting the link, a road type information 223 indicating type of the road including the link, link length information 224 indicating a length of the link, a link travel time 225, link IDs (connection link IDs) 226 respectively connecting to the two nodes, and the like.

In addition, the map database 200 includes facility information 250 regarding a facility. The facility information 250 includes with respect to each coordinate information 251 of the facility, items such as a facility name 252, a category 253 indicating category of the facility (e.g., a restaurant, a convenience store, a supermarket, a department store, a leisure land, a park, a public facility, a sports facility, and the like), and detailed information 254 indicating detailed information of the facility (e.g., business hours, and the like).

It is to be noted that the above configuration of the map database 200 represents just major elements in order to explaining a feature of the present invention, and the configuration is not limited to the example above. In addition, it does not exclude any information items included in general map information.

A schematic hardware configuration has been explained so far, as one example of the navigation device 1. It is to be noted that this configuration represents just a major configuration in order to explain a feature of the present invention, and the configuration is not limited to the example above. In addition, it does not exclude any configuration included in a general navigation device.

By way of example, the navigation device 1 may be provided with a tuner for digital terrestrial broadcasting. In addition, the navigation device may not be necessarily mounted on a vehicle, but it may be a PND (Personal Navigation Device) being portable, for instance. It is further possible to establish communication with other in-vehicle equipment (e.g., audio sets and air conditioner) and sensors, via an in-car communication network such as in-car LAN (Local Area Network) and CAN (Controller Area Network). In addition, according to a standard such as USB, the navigation device may be connected to a portable storage medium.

Furthermore, by way of example, it is possible that the navigation device 1 uses the communication unit 66 to establish communication with a device such as external server, or the like, transmits information of a departure place and a destination, allows such external device to calculate route information, and acquires information therefrom. The navigation device 1 may calculate the route information by using not only the map database 200 owned by itself, but also map data held by the device such as the external server.

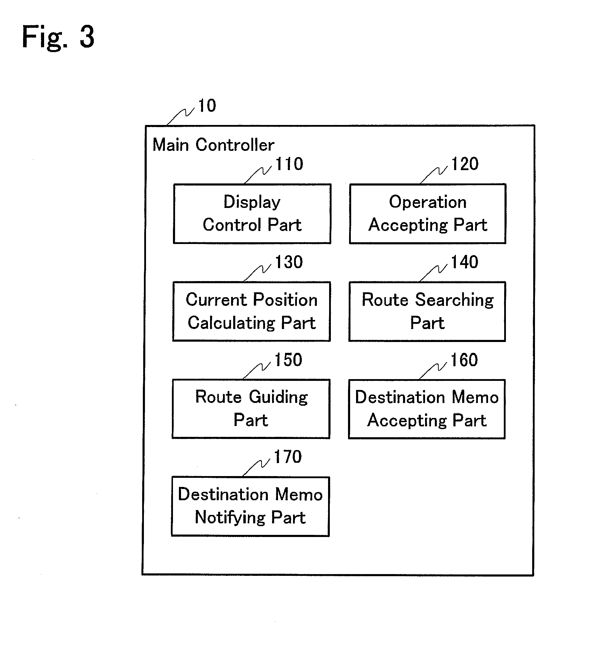

Next, with reference to FIG. 3, an explanation will be made as to a functional configuration of the main controller 10. FIG. 3 is a block diagram showing one example of the functional configuration of the main controller 10.

The main controller 10 includes seven functional parts; i.e., a display control part 110, an operation accepting part 120, a current position calculating part 130, a route searching part 140, a route guiding part 150, a destination memo accepting part 160, and a destination memo notifying part 170.

These functional parts are implemented, when the CPU 11 executes predetermined programs loaded on the RAM 12 from the ROM 13 and the storage unit 50. Those predetermined programs are stored in advance in the ROM 13 and the storage unit 50 (for example, at the time of manufacturing the navigation device 1). It is a matter of course that those programs may be downloaded from the network via the communication unit 66, and then installed or updated. Alternatively, those programs may be read out from a storage medium such as a CD-ROM, and then installed or updated.

The display control part 110 accepts an instruction from any other functional parts, generates and outputs graphics information used for rendering a user interface screen on the display 20. By way of example, the display control part generates the graphics information on a designated scale according to a designated rendering method, so as to render images of roads, other map constitutional elements, a current position, a via point, a destination, a route, facility information, and the like. In addition, the display control part generates the graphics information, so as to render images such as items for accepting an instruction from a user, and manual operation buttons.

The operation accepting part 120 accepts the user's operation inputted via the input unit 30, analyzes the details of the operation, and gives notice to other functional parts, so that processes in association with the details of the operation are executed. Furthermore, according to the voice inputted via the microphone 42, the operation accepting part analyzes by voice recognition, the details of the operation being associated, and gives notice to the other functional parts, so that the process associated with the details of the operation are executed.

By way of example, the operation accepting part 120 instructs the display control part 110 to display menu items and manual operation buttons for accepting an instruction from the user. Furthermore, for example, the operation accepting part 120 accepts the designation of a destination according to the user's operation, and instructs the route searching part 140 to perform the process for computing the route from the current position to the designated destination.

The current position calculating part 130 calculates the current position at predefined intervals, by using the information outputted from the vehicle speed sensor 60, the gyro sensor 62, and the GPS receiver 64. In addition, according to a map matching process by using a result of the calculation, the current position is adjusted onto a road (link) which has the highest correlation.

The route searching part 140 uses the Dijkstra's Algorithm, or the like, to search for a route which minimizes the cost (e.g., a travel distance and travel time) of the route connecting the designated two points (the designated departure place and destination, or the current position and the designated destination). By way of example, the route searching part 140 acquires the destination designated by the user, via the operation accepting part 120. Furthermore, the route searching part 140 acquires the information of the current position from the current position calculating part 130. Then, the route searching part 140 assumes as a cost, the travel time 225 included in the map database 200, and searches for a route which minimizes the total cost from the current position to the destination. The route searching part 140 also searches for the routes, respectively, from the departure place or the current position to a via point, from the via point to another via point, and from the via point to the destination, in the same manner as described above.

The route guiding part 150 reads out the map data surrounding the current position calculated by the current position calculating part 130, from the map database 200 in the storage unit 50. Then, the route guiding part instructs the display control part 110 to display the current position in such a manner as being superimposed on thus readout map data. In addition, the route guiding part performs route guidance by using the route information retrieved by the route searching part 140. By way of example, the route guiding part 150 instructs the display control part 110 to display the route information in such a manner as being superimposed on the map data. The route guiding part 150 further instructs the display control part 110 to display a direction to travel, on the map being displayed on the display 20, and guides the user along the route.

The destination memo accepting part 160 accepts from the user, information relating to the destination. Specifically, the destination memo accepting part 160 displays on the display 20 via the display control part 110, a user interface screen for inputting the information relating to the destination. The destination memo accepting part 160 accepts the input of the information relating to the destination on the user interface screen, via the operation accepting part 120. In addition, the destination memo accepting part 160 stores thus accepted information relating to the destination, in the storage unit 50 or in the RAM 12, as the information associated with the destination used for the route search.

Here, as the information relating to the destination, the user is allowed to freely input a purpose (for example, shopping, item types to be shopped, sports, watching movies, or the like) which is intended to be carried out at the destination. In other words, the user is allowed to create a memo relating to the destination.

The destination memo accepting part 160 further accepts from the user, a category of the purpose intended to be carried out at the destination. Specifically, the destination memo accepting part 160 displays on the display 20, via the display control part 110, a user interface screen for inputting the category of the purpose that the user intends to carry out at the destination. The destination memo accepting part 160 accepts the input of the category, on the user interface screen via the operation accepting part 120. In addition, the destination memo accepting part 160 stores in the storage unit 50 or in the RAM 12, the information indicating the category of the purpose being accepted, as the information associated with the destination used for the route search.

Here, the category of the purpose is obtained by classifying the purpose on the basis of a predetermined concept. The category of the purpose may indicate shopping, sports, leisure, or the like, for instance. It is to be noted that in the present embodiment, the category of the purpose is represented being more generic than the aforementioned category of the facility 253.

As a matter of course, the destination memo accepting part 160 may accept more than one category of the purpose. It is further possible that the destination memo accepting part 160 specifies the category automatically, without accepting the category of the purpose from the user. On this occasion, the destination memo accepting part 160, for example, refers to a memo relating to the destination, and extracts a phrase associated with a keyword indicating a predetermined category, thereby identifying the category.

It is to be noted that the destination memo accepting part 160 may acquire the memo relating to the destination or the category of the purpose, from an external device such as a cell phone and a PC, via the communication unit 66. It is possible to connect a portable storage medium to the navigation device 1, and acquire from the storage medium, a memo relating to the destination and the category of the purpose.

The destination memo notifying part 170 outputs the information relating to the destination when a predetermined condition is satisfied. Specifically, when the distance between the current position and the destination is equal to or less than a predetermined distance (e.g. , 500 m), the destination memo notifying part 170 displays on the display 20, via the display control part 110, a memo for the destination which the destination memo accepting part 160 stores. The contents of the memo for the destination may be outputted from the speaker 41 by voice. In addition, the destination memo notifying part 170 displays the memo for the destination, after arriving at the destination and upon leaving the destination (e.g., upon arriving at the destination, the memo for the destination and the category of the purpose are held in the storage unit 50, and thereafter, when the power of the navigation device 1 is turned on, the memo is displayed).

In the case where a via point is set on the route, the destination memo notifying part 170 outputs the information relating to the destination, upon arriving at the via point and also upon leaving the via point, in the same manner as described above. It is to be noted that the destination memo notifying part 170 compares the category 253 of the via point (in the present embodiment, it is assumed that the via point represents a particular facility), with the category of the purpose. When the category of the purpose includes the category of the via point, the destination memo notifying part displays the memo for the destination. By way of example, if the category of the purpose indicates "shopping", and the category of the via point indicates "convenience store", the memo for the destination is displayed.

It is to be noted that the constitutional elements described above are categorized according to the processing details, so as to facilitate understanding of the configuration of the navigation device 1 and the main controller 10. The way how the constitutional elements are categorized or the names thereof may not restrict the scope of the present invention. The configuration of the navigation device 1 and the main controller 10 may be categorized into more various constitutional elements according to the processing details. It is alternatively possible to categorize the elements in such a manner that one constitutional element executes more various processing. Furthermore, the processing of each constitutional element may be executed by a piece of hardware, or by more than one piece of hardware.

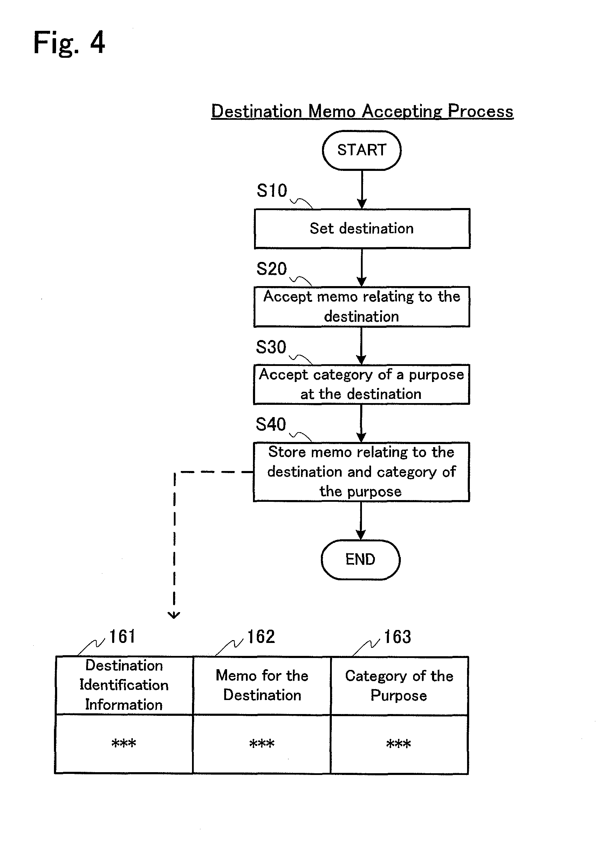

Next, with reference to FIG. 4 to FIG. 8, an explanation will be made as to the destination memo accepting process and the destination memo notifying process which are characteristic processes and implemented by the aforementioned navigation device 1.

FIG. 4 is a flow diagram showing one example of the destination memo accepting process in the navigation device. This flow shows that the memo relating to the destination and the category of the purpose are allowed to be inputted, after the user sets the destination.

In the step S10, the operation accepting part 120 accepts setting of a destination. Specifically, the route searching part 140 acquires the setting of the destination which is accepted by the operation accepting part 120. It is further possible to acquire the setting of a via point. In addition, the route searching part 140 searches for a route from the current position to the destination being set, the route passing through the via point being set. Then, according to the route being a result of the search, the route guiding part 150 performs the guidance.

In the step S20, the destination memo accepting part 160 accepts a memo relating to the destination. Specifically, the destination memo accepting part 160 instructs the display control part 110 to display the user interface screen for inputting the information relating to the destination. Then, the destination memo accepting part 160 accepts inputting of the information relating to the destination on the user interface screen, via the operation accepting part 120.

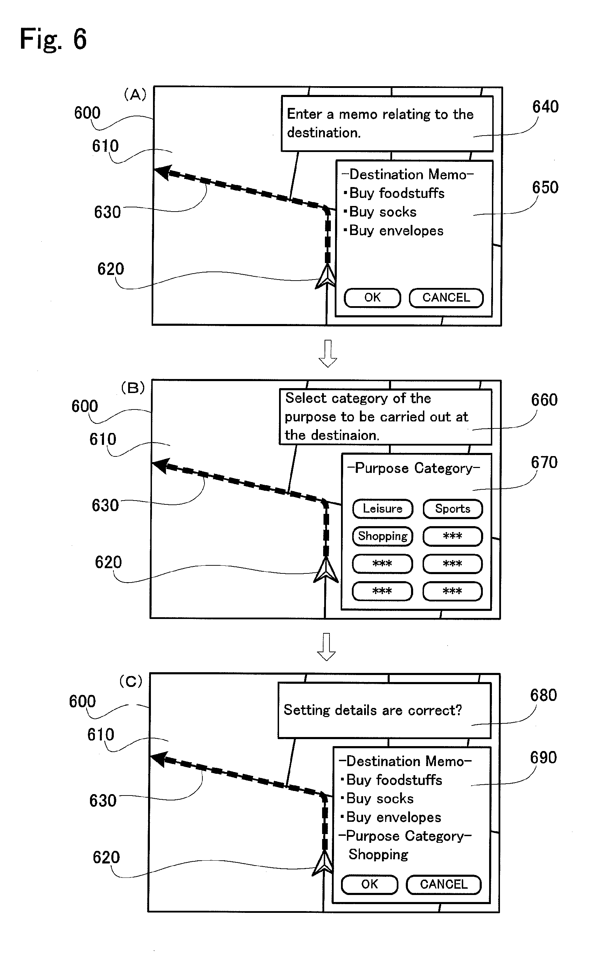

By way of example, as shown in the user interface screen 600 in FIG. 6(A), the destination memo accepting part 160 instructs the display control part 110 to display a message 640 prompting for inputting a message, and a destination memo input field 650 for inputting the information relating to the destination. It is to be noted that the route guiding part 150 instructs the display control part 110 to display on the user interface screen 600, a current position mark 620, route information 630, and the like, in superimposed manner on the map image 610.

In the step S30, the destination memo accepting part 160 accepts setting of the category relating to the destination via the operation accepting part 120. Specifically, the destination memo accepting part 160 instructs the display control part 110 to display the user interface for inputting a category of the purpose that the user intends to carry out at the destination. In addition, the destination memo accepting part 160 accepts a selection of the category on the user interface screen via the operation accepting part 120.

By way of example, as shown by the user interface screen 600 in FIG. 6(B), the destination memo accepting part 160 instructs the display control part 110 to display a message 660 prompting for selecting a category, and a purpose category selection field 670 for selecting the category of the purpose.

In the step S40, the destination memo accepting part 160 stores the memo relating to the destination and the category of the purpose. Specifically, the destination memo accepting part 160 stores in the storage unit 50 or in the RAM 12, identification information 161 of the destination set in the step S10 (e.g., an ID and coordinate information), the memo 162 relating to the destination accepted in the step S20, and the category 163 relating to the purpose accepted in the step S30, in such a manner as establishing association among them.

It is further possible to display the user interface screen 600, as shown in FIG. 6(C), allowing the user to decide the memo for the destination and the category of the purpose, being inputted respectively in the step 20 and the step 30. The destination memo accepting part 160 instructs the display control part 110 to display the message 680 prompting for confirming the memo for the destination and the category of the purpose, and a confirmation field 690 for deciding the memo for the destination and the category of the purpose.

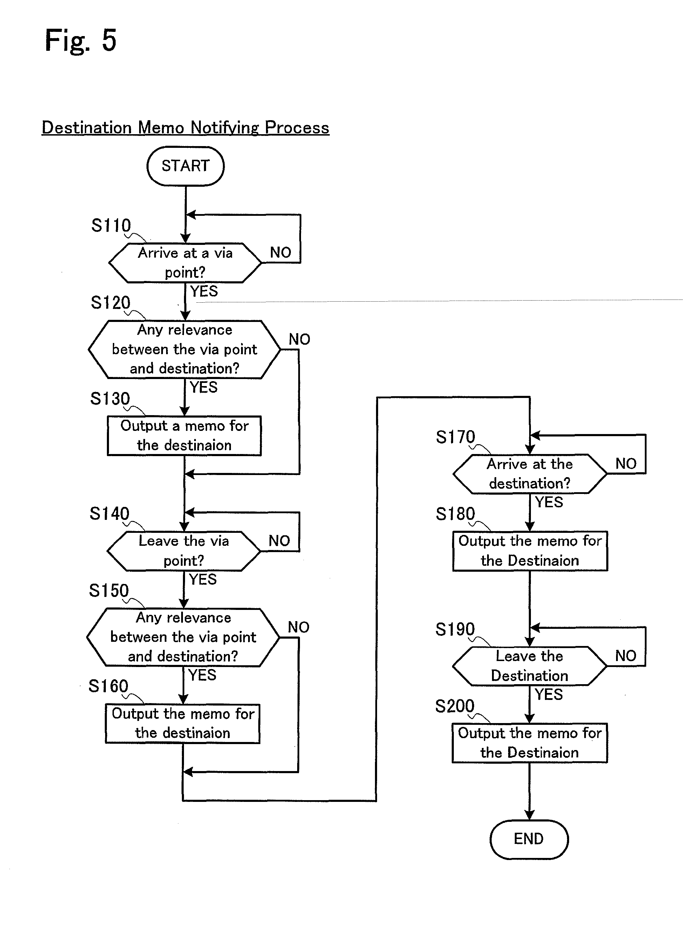

FIG. 5 is a flow diagram showing one example of the destination memo notifying process in the navigation device. This flow is executed after setting the memo for the destination and the category of the purpose during the navigation process. Here, it is assumed that there is a setting of the route information including one via point.

In the step S110, the destination memo notifying part 170 determines whether or not the user has arrived at the via point. Specifically, the destination memo notifying part 170 determines whether or not the distance between the current position and the via point is equal to or less than a predetermined distance. The destination memo notifying part 170 next performs the process in the step S120, only when the distance between the current position and the via point becomes equal to or less than the predetermined distance (S110: YES).

In the step S120, the destination memo notifying part 170 determines whether or not the via point has any relevance to the destination. Specifically, the destination memo notifying part 170 acquires the category of the purpose set in the flow as shown in FIG. 4. The destination memo notifying part 170 further acquires the category 253 associated with the via point being set, from the facility information 250 in the map database 200. Then, it is determined whether or not the category of the purpose includes the category of the via point. If the category of the purpose includes the category of the via point (S120: YES), the process proceeds to the step S130. If the category of the purpose does not include the category of the via point (S120: NO), the process proceeds to the step S140. It is to be noted that if the via point does not correspond to a particular facility, the category is not obtainable. Therefore, it is determined that the category of the purpose does not include the category of the via point.

In the step S130, the destination memo notifying part 170 outputs the memo for the destination via the display control part 110. Specifically, the destination memo notifying part 170 instructs the display control part 110 to display the memo for the destination set in the flow as shown in FIG. 4.

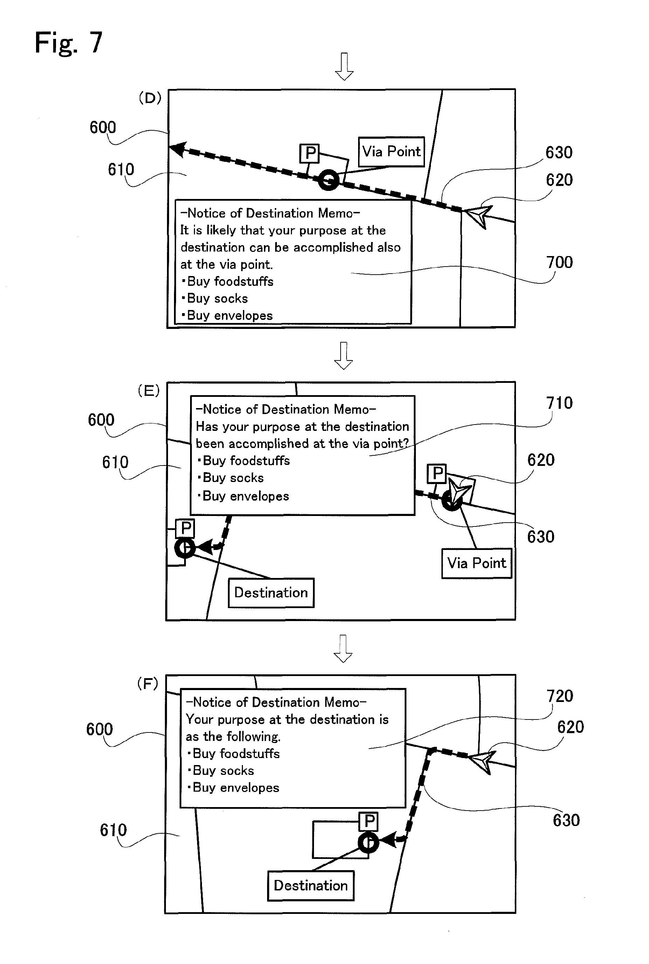

By way of example, as shown in the user interface screen 600 in FIG. 7(D), the destination memo notifying part 170 instructs the display control part 110 to display a destination memo notification field 700 including the contents of the memo for the destination. Then, the destination memo notifying part 170 performs the process in the step S140 next.

In the step S140, the destination memo notifying part 170 determines whether or not the user has left the via point. Specifically, the destination memo notifying part 170 determines whether or not the power of the navigation device 1 has been turned on. It is a matter of course that this is not the only way for determining the departure. By way of example, it is also possible to detect that the starter of the vehicle is turned on. Furthermore, it is possible to determine whether or not the current position has passed through the via point along the route. Only when it is determined that the user has left the via point (S140: YES), the process proceeds to the step S150.

In the step S150, the destination memo notifying part 170 determines whether or not the via point has any relevance to the destination. Since the processing details are the same as the step S120, tedious explanations will not be made. When the category of the purpose includes the category of the via point (S150: YES), the process proceeds to the step S160. When the category of the purpose does not include the category of the via point (S150: NO), the process proceeds to the step S170.

In the step S160, the destination memo notifying part 170 outputs the memo for the destination, via the display control part 110. Specifically, the destination memo notifying part 170 instructs the display control part 110 to display the memo for the destination that is set in the flow as shown in FIG. 4.

By way of example, as shown in the user interface screen 600 of FIG. 7 (E), the destination memo notifying part 170 instructs the display control part 110 to display a destination memo notification field 710 for displaying the memo for the destination. Then, the process in the step S170 is performed next.

In the step S170, the destination memo notifying part 170 determines whether or not the user has arrived at the destination. Specifically, the destination memo notifying part 170 determines whether or not the distance between the current position and the destination becomes equal to or less than a predetermined distance. Only when the distance between the current position and the destination becomes equal to or less than the predetermined distance (S170: YES), the process proceeds to the step S180.

In the step S180, the destination memo notifying part 170 outputs the memo for the destination via the display control part 110. Specifically, the destination memo notifying part 170 instructs the display control part 110 to display the memo for the destination that is set in the flow shown in FIG. 4.

By way of example, as shown in the user interface screen 600 of FIG. 7 (F), the destination memo notifying part 170 instructs the display control part 110 to display the destination memo notification field 720 for displaying the memo for the destination. Then, the process in the step S190 is performed next.

In the step S190, the destination memo notifying part 170 determines whether or not the user has left the destination. Specifically, the destination memo notifying part 170 determines whether or not the power of the navigation device 1 has been turned on. It is a matter of course that this is not the only way for determining the departure. By way of example, it is also possible to detect that the starter of the vehicle is turned on. The destination memo notifying part 170 performs the process in the step S200 next, only when the user has left the destination (S190: YES).

In the step S200, the destination memo notifying part 170 outputs the memo for the destination via the display control part 110. Specifically, the destination memo notifying part 170 instructs the display control part 110 to display the memo for the destination set in the flow of FIG. 4.

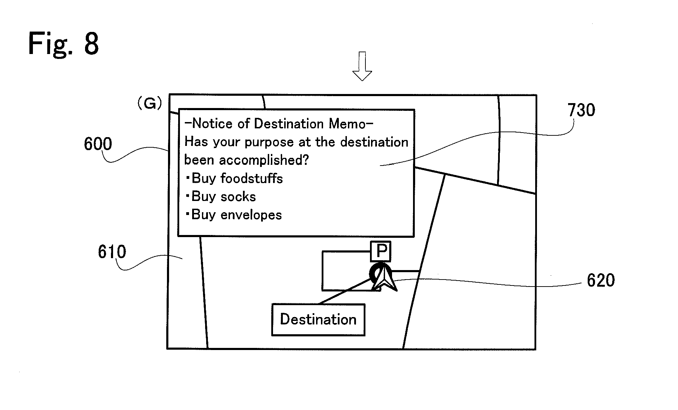

By way of example, as shown in the user interface screen 600 in FIG. 8 (G), the destination memo notifying part 170 instructs the display control part 110 to display a destination memo notification field 730 for displaying the memo for the destination. Then, the present flow ends.

It is to be noted that each process unit of the flows in FIG. 4 and FIG. 5 as described above is obtained by dividing the processing of the navigation device 1 and the main controller 10 according to major processing details, so as to facilitate understanding of the processing. A way for dividing the process units or the name of each unit may not restrict the scope of the present invention. The processing of the navigation device 1 and the main controller 10 may be further divided into more various process units according to the processing details. It is alternatively possible to divide the processing in such a manner that one process unit includes more various processing.

The first embodiment of the present invention has been explained so far. According to the present embodiment, it is possible to support the user to accomplish a purpose (or finish an errand) to be carried out at the destination.

In other words, in the present embodiment, if a purpose to be carried out at the destination is set, the purpose is outputted upon arriving at the destination and the via point, or upon leaving. With this configuration, the user is allowed to confirm the purpose, upon arriving the destination and the via point, thereby keeping it in mind and facilitating the attainment of the purpose. In addition, the purpose can be confirmed also upon leaving the destination and the via point, thereby keeping it in mind and facilitating the attainment of the purpose.

It is to be noted that the aforementioned embodiment of the present invention is intended to illustrate the summary and scope of the present invention, not restricting the invention. Many alternatives, modifications, and variations are obvious to a person skilled in the art.

By way of example, the process relating to the via point (the step S30 in FIG. 4, the steps from S110 to S160 in FIG. 5, and the like) may be skipped. In addition, the information relating to the destination may be outputted only at either one of the arriving time and the leaving time, for instance. It is further possible to set a memo relating to the via point, and the memo being associated may be outputted at either one of the arriving time and the leaving time, for instance. The memo for the destination may be outputted in addition to the memo for the via point.

By way of example, a target place for outputting the memo relating to the destination is not limited to the via point. In other words, it is further possible to configure as the following; when the current position approaches a facility located along the route, the destination memo notifying part 170 determines whether or not the category of the purpose includes the category of the facility, and if is included, the destination memo notifying part instructs the display control part 110 to output the memo relating to the destination. It is a matter of course that the facility is not limited to those located along the route, but a facility located within a predetermined range from the current position may be included as a target.

It is further possible, for example, that the destination memo accepting part 160 stores a history of memos for the destination, and when a route newly set includes the same destination as the one to which a memo was set in the past, the destination memo accepting part instructs the display control part 110 to output the history of the memos for the destination and notifies the user thereof. With this configuration, the user is allowed to refer to the past purposes, upon inputting a memo relating to the destination.

It is further possible, for instance, that when the memo for the destination is outputted, the destination memo accepting part 160 accepts from the user, a result indicating whether or not each purpose included in the memo has been accomplished, and stores the result together with the history of the memos. When a newly set route includes the same destination as the one to which a memo was set in the past, the destination memo accepting part may instruct the display control part 110 to output the history of the memos relating to the destination and a result as to accomplishment of the purpose, and notify the user thereof. With the configuration above, the user is allowed to refer to the purposes in the past together with the result as to the accomplishment of the purposes, upon inputting the memo relating to the destination.

### Reference Signs List

1: NAVIGATION DEVICE, 10: MAIN CONTROLLER, 11: CPU, 12: RAM, 13: ROM, 14: I/F, 15: SIGNAL LINE, 20: DISPLAY, 30: INPUT UNIT, 31: TOUCH PANEL, 32: HARD SWITCH, 40: AUDIO INPUT AND OUTPUT UNIT, 41: SPEAKER, 42: MICROPHONE, 50: STORAGE UNIT, 60: VEHICLE SPEED SENSOR, 62: GYRO SENSOR, 64: RECEIVER, 66: COMMUNICATION UNIT, 68: FM MULTIPLEX BROADCASTING RECEIVER, 70: BEACON RECEIVER, 110: DISPLAY CONTROL UNIT, 120: OPERATION ACCEPTING UNIT, 130: CURRENT POSITION CALCULATING PART, 140: ROUTE SEARCHING PART, 150: ROUTE GUIDING PART, 160: DESTINATION MEMO ACCEPTING PART, 170: DESTINATION MEMO NOTIFYING PART, 200: MAP INFORMATION, 210: MESH ID, 220: LINK DATA, 221: LINK ID, 222: COORDINATE INFORMATION, 223: TYPE INFORMATION, 224: LINK LENGTH INFORMATION, 225: LINK TRAVEL TIME, 226: CONNECTION LINK ID, 250: FACILITY INFORMATION, 251: COORDINATE INFORMATION, 252: NAME, 253: CATEGORY, 254: DETAILED INFORMATION, 600: USER INTERFACE SCREEN, 610: MAP IMAGE, 620: CURRENT POSITION MARK, 630: ROUTE INFORMATION, 640: MESSAGE, 650: DESTINATION MEMO INPUT FIELD, 660: MESSAGE, 670: DESTINATION CATEGORY SELECTION FIELD, 680: MESSAGE, 690: CONFIRMATION FIELD, 700: DESTINATION MEMO NOTIFICATION FIELD, 710: DESTINATION MEMO NOTIFICATION FIELD, 720: DESTINATION MEMO NOTIFICATION FIELD, 730: DESTINATION MEMO NOTIFICATION FIELD

## Claims

1. A navigation device for performing guidance by using map information, comprising,
a current position calculating unit adapted to calculate a current position,
a route acquiring unit adapted to acquire route information from the current position to a destination,
a purpose acquiring unit adapted to acquire information relating to the destination, including a purpose that a user intends to carry out at the destination,
a judging unit adapted to judge at least one of the following; arriving at the destination and leaving the destination, and
a purpose notifying unit adapted to output the information relating to the destination and notifying the user thereof, upon either of arriving the destination and leaving the destination.

2. The navigation device according to claim 1, wherein,
the judging unit judges at least one of the following; arriving at a via point and leaving the via point, and
the purpose notifying unit outputs the information relating to the destination and notifies the user thereof, upon either of arriving the via point and leaving the via point,

3. The navigation device according to claim 2, wherein,
the purpose acquiring unit acquires information indicating a category of the purpose together with the purpose, and
the purpose notifying unit specifies a category of the via point by using the map information, upon arriving at the via point or upon leaving the via point, determines whether or not the category of the via point is related to the category of the purpose, and outputs the information relating to the destination, when there is relevance therebetween.

4. The navigation device according to claim 3, wherein,
the purpose acquiring unit acquires the category of the purpose, by accepting an input from the user, or by extracting the category from the information relating to the destination.

5. The navigation device according to claim 1, wherein,
the purpose acquiring unit stores the information relating to the destination as a history of the destination, then upon acquiring a new route by the route acquiring unit, determines whether or not the history includes the information relating to the destination of the new route, and outputs the information relating to the destination, when the history includes the information relating to the destination of the new route.

6. The navigation device according to claim 5, wherein,
when the purpose notifying unit outputs the information relating to the destination, the purpose acquiring unit accepts an input of data indicating whether or not the purpose included in the information relating to the destination has been accomplished, stores the data as a history, and upon acquiring the new route, outputs the data together with the information relating to the destination of the new route.

7. A guidance method for information relating to a destination in a navigation device,
the navigation device executing,
a current position calculating step for calculating a current position,
a route acquiring step for acquiring route information from the current position to the destination,
a purpose acquiring step for acquiring information relating to the destination, including a purpose that a user intends to carry out at the destination,
a judging step for judging at least one of the following; arriving at the destination and leaving the destination, and
a purpose notifying step for outputting the information relating to the destination and notifying the user thereof, upon either of arriving the destination and leaving the destination.
